# FASCICULE DE BREVET EUROPEEN

(11) **EP 0 427 635 B1**
(45) Date de publication et mention de la délivrance du brevet: **20.04.1994**
(21) Numéro de dépôt: 90403179.6
(22) Date de dépôt: 08.11.1990
(51) Int. Cl.: H02H 9/02, H02H 9/00

(54) **Dispositif de commande de puissance, notamment variateur de lumière, à protection contre les courts-circuits et les surcharges**
Leistungssteuerungseinrichtung, insbesondere Dimmer, mit Schutz gegen Kurzschluss und Überlastung
Power control device, in particular dimmer, with protection against short-circuit and overload

(30) Priorité: 09.11.1989 FR 8914697
(43) Date de publication de la demande: 15.05.1991
(73) Titulaire: LEGRAND, F-87045 Limoges Cédex (FR)
(72) Inventeur: Malinvaud, Philippe, F-87270 Couzeix (FR); Martinez, André, F-87100 Limoges (FR)
(74) Mandataire: CABINET BONNET-THIRION

(56) Documents cités:
- DE-U- 8 703 701
- US-A- 3 708 720
- ELECTRONIQUE APPLICATIONS, no. 47, avril 1986, Paris, FR, pp. 53-55 ; "Gradateurs de lumière : montages simples ne générant pas de parasites".

## Description

La présente invention concerne d'une manière générale les dispositifs de commande de puissance du genre mettant en oeuvre un triac, et elle vise plus particulièrement, mais non nécessairement exclusivement, le cas où il s'agit de variateurs de lumière.

Ainsi qu'on le sait, pour la commande du triac mis en oeuvre, il intervient, sur le circuit de gachette du triac, un certain nombre de composants, et, notamment, un condensateur chargé par un réseau de résistances incluant un potentiomètre dont la commande est à la disposition de l'usager.

Ainsi qu'on le sait, également, il est usuel de prévoir, conjointement, pour ménager le réseau sur lequel doit être branché un tel dispositif de commande de puissance, un circuit d'antiparasitage comportant au moins une inductance et au moins un condensateur.

Ainsi qu'on le sait, enfin, il est usuel de prévoir une protection générale par fusible, et, pour satisfaire aux normes en vigueur, deux protections supplémentaires.

Il s'agit, tout d'abord, d'une protection contre les courts-circuits entre anodes et gachette du triac, et il est connu, pour ce faire, de prévoir, parmi les résistances intervenant sur le circuit de gâchette du triac, une thermistance à coefficient de température positif qui protège la résistance de charge du condensateur.

Il s'agit, ensuite, d'une protection à l'égard d'une surcharge correspondant à un multiple donné de l'intensité assignée au fusible.

Il est, par ailleurs, connu du document US-A-3708720 de protéger un triac, ou un enroulement moteur en série avec celui-ci, contre un échauffement excessif. Pour ce faire, ce document propose de placer une thermistance dans le circuit de gâchette du triac. La thermistance est couplée thermiquement au triac ou à l'enroulement moteur, de manière que le triac coupe l'alimentation de l'enroulement quand une température prédéterminée est atteinte.

La présente invention a d'une manière générale pour objet une disposition permettant de satisfaire de manière très simple à cette dernière exigence, à l'aide des seuls composants déjà disponibles, et donc sans frais supplémentaire.

De manière plus précise, elle a pour objet un dispositif de commande de puissance, notamment un variateur de lumière, du genre comportant, d'une part, un triac sur le circuit de gâchette duquel intervient, pour la protection contre les courts-circuits, une thermistance à coefficient de température positif, et, d'autre part, un circuit d'antiparasitage comportant une inductance, ce dispositif de commande étant d'une manière générale caractérisé en ce que, pour assurer également une protection contre les surcharges, la thermistance est couplée thermiquement avec l'inductance, en sorte que, en cas de surcharge, la commande en conduction du triac se trouve retardée à chaque alternance.

Par exemple, l'inductance étant un tore, la thermistance est placée au centre de ce tore, en y étant si désiré noyée au sein d'une masse de couplage thermique dont le matériau constitutif est un produit isolant du point de vue électrique et présentant une bonne conductivité thermique.

Quoi qu'il en soit, du fait du couplage thermique entre elle et l'inductance, la thermistance voit sa résistance augmentée lorsque la température de l'inductance augmente, ce qui est le cas lors de surcharges, et, la résistance de charge du condensateur commandant la gâchette du triac augmentant à raison de celle de cette thermistance, la commande en conduction de ce triac s'en trouve retardée d'autant à chaque alternance.

La puissance qu'il absorbe devenant ainsi globalement plus faible, le dispositif de commande de puissance suivant l'invention peut avantageusement revenir à une température d'équilibre avant destruction de ses composants les plus exposés.

Ainsi, suivant l'invention, il est tiré un parti supplémentaire de la thermistance mise en oeuvre, cette thermistance assurant non seulement la protection contre les courts-circuits, mais encore la protection contre les surcharges.

Les caractéristiques et avantages de l'invention ressortiront d'ailleurs de la description qui va suivre, à titre d'exemple, en référence aux dessins schématiques annexés sur lesquels :
la figure 1 est un schéma du dispositif de commande de puissance suivant l'invention ;
la figure 2 est une vue partielle en perspective de ce dispositif de commande de puissance ;
la figure 3 en est une vue partielle en coupe transversale, suivant la ligne III-III de la figure 2.

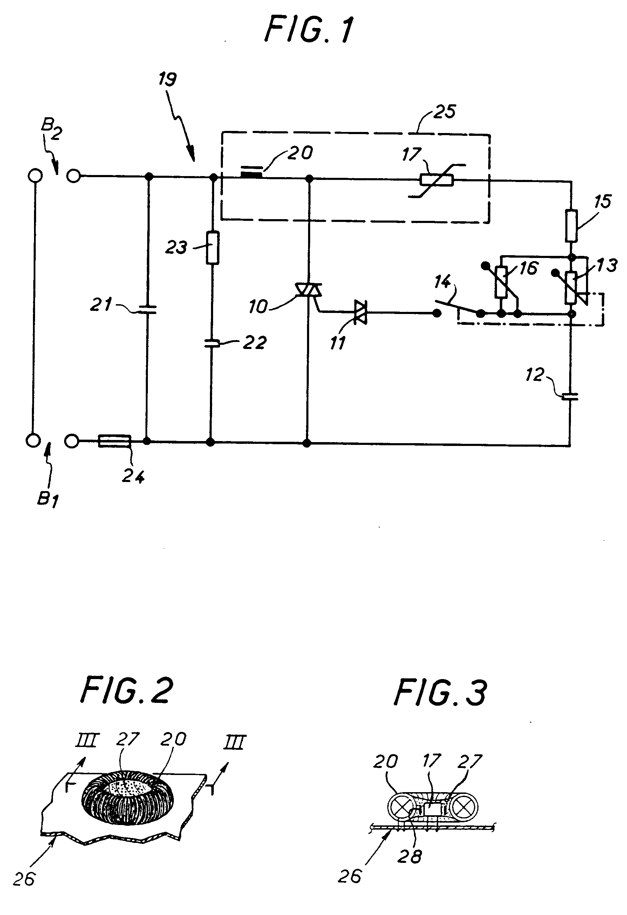

Sur la figure 1 on reconnaît le schéma d'un dispositif de commande de puissance du genre mettant en oeuvre, entre les bornes B1 par lesquelles il est propre à être branché sur une quelconque source d'alimentation en courant alternatif, en pratique le réseau usuel de distribution électrique, et les bornes B2 par lesquelles il est apte à être branché sur la charge à desservir, par exemple un circuit d'éclairage, un triac 10.

De manière connue en soi, sur le circuit de gâchette de ce triac 10 intervient, par l'intermédiaire d'une diac 11, un condensateur 12 chargé par un réseau de résistances incluant, d'une part, un potentiomètre 13, dont la commande, qui est à la disposition de l'usager, pilote également un interrupteur de marche arrêt 14, et qui est en série avec une résistance 15 tout en ayant également une résistance 16 en dérivation à ses bornes, et, d'autre part, en série avec ce potentiomètre 13 et la résistance 15, pour la protection contre les courts-circuits, une thermistance à coefficient de température positif 17.

De manière également connue en soi, le dispositif de commande de puissance suivant l'invention comporte, en outre, entre les bornes B1, B2 et le triac 10, un circuit d'antiparasitage 19 comportant une inductance 20 et un condensateur 21.

Dans la forme de mise en oeuvre représentée, il est en outre prévu, pour éviter un effet de "papillonnement" lorsque la charge est faible, un circuit "anti-Flicker" comportant un condensateur 22 et une résistance 23.

De manière connue en soi, enfin, il est prévu, pour la protection générale de l'ensemble, un fusible 24.

Suivant l'invention, et tel que schématisé par un trait interrompu 25 sur la figure 1, la thermistance 17 est couplée thermiquement à l'inductance 20.

Il peut suffire, par exemple, qu'elle soit disposée au voisinage de celle-ci.

Mais, suivant un développement de l'invention, lorsque, tel que représenté sur les figures 2 et 3, l'inductance 20 est un tore, la thermistance 17 est préférentiellement placée au centre de ce tore.

Dans la forme de mise en oeuvre représentée, l'ensemble est porté par une plaquette de circuit imprimé 26, avec les autres composants, non représentés, concernés.

Suivant un développement complémentaire de l'invention, le volume interne du tore formant ainsi l'inductance 20 contient alors avantageusement une masse de couplage thermique 27 dans laquelle est noyée la thermistance 17.

Préférentiellement, le matériau constitutif de cette masse de couplage thermique 27 est un produit isolant du point de vue électrique et présentant une bonne conductivité thermique.

A titre indicatif, et sans qu'il puisse en résulter une quelconque limitation de l'invention, il est précisé que l'élastomère silicone dit "SILASTIC JRTV", bicomposant de marque DOW CORNING, donne à ce sujet satisfaction.

Si désiré, et tel que schématisé en 28 sur la figure 3, la thermistance 17 peut en outre être avantageusement entourée d'une gaine thermo-rétractable qui assure son isolement électrique même si son centrage dans le tore formant l'inductance 20 est défectueux.

Quoi qu'il en soit, du fait que, lors d'une surcharge, la thermistance 17, par son implantation particulière, est soumise à l'échauffement dont est alors l'objet l'inductance 20, cette thermistance 17 assure, avantageusement, par elle-même, suivant le processus précédemment exposé, une protection à l'égard d'une telle surcharge.

Bien entendu, la présente invention ne se limite pas à la forme de mise en oeuvre décrite et représentée, mais englobe toute variante d'exécution.

## Revendications

1. Dispositif de commande de puissance, notamment variateur de lumière, du genre comportant, d'une part, un triac (10) sur le circuit de gâchette duquel intervient, pour la protection contre les courts-circuits, une thermistance à coefficient de température positif (17), et, d'autre part, un circuit d'antiparasitage (19) comportant une inductance (20), caractérisé en ce que, pour assurer également une protection contre les surcharges, ladite thermistance (17) est couplée thermiquement avec ladite inductance (20), en sorte que, en cas de surcharge, la commande en conduction du triac (10) se trouve retardée à chaque alternance.

2. Dispositif de commande de puissance suivant la revendication 1, caractérisé en ce que, l'inductance (20) étant un tore, la thermistance (17) est placée au centre de ce tore.

3. Dispositif de commande de puissance suivant la revendication 2, caractérisé en ce que le volume interne du tore formant l'inductance (20) contient une masse de couplage thermique (27) dans laquelle est noyée la thermistance (17).

4. Dispositif de commande de puissance suivant la revendication 3, caractérisé en ce que le matériau constitutif de la masse de couplage thermique (27) est un produit isolant du point de vue électrique et présentant une bonne conductibilité thermique.

5. Dispositif de commande de puissance suivant l'une quelconque des revendications 2 à 4, caractérisé en ce que la thermistance (17) est entourée d'une gaine thermo-rétractable (28).

## Claims

1. A power control device, in particular a light variator, of the type comprising, on the one hand, a triac (10) on the gate circuit, with which a thermistor with a positive temperature coefficient (17) comes into play for protecting against short circuits, and, on the other hand, a suppression circuit (19) comprising an inductance coil (20), characterised in that in order to also protect against overloading, said thermistor (17) is coupled thermally to said inductance coil (20) in such a way that in the event of overload control of the conduction of the triac (10) is retarded on each alternation.

2. A power control device according to Claim 1, characterised in that the inductance coil (20) is a torus and the thermistor (17) is placed in the centre of the torus.

3. A power control device according to Claim 1, characterised in that the internal volume of the torus which forms the inductance coil (20) contains a thermal coupling (27) mass in which the thermistor (17) is embedded.

4. A power control device according to Claim 3, characterised in that the material of which the thermal coupling mass (27) is made is an electrically insulating product and has good properties of thermal conductivity.

5. A power control device according to any one of Claims 2 to 4, characterised in that the thermistor (17) is surrounded by a heat-shrinkable casing (28).

## Patentansprüche

1. Leistungssteuervorrichtung, insbesondere Lichtregler, umfassend einerseits einen Triac (10), in dessen Steuerelektrodenkreis zum Schutz gegen Kurzschlüsse ein Thermistor (17) mit positivem Temperaturkoeffizient und andererseits ein Entstörungskreis (19) vorgesehen ist, der eine Induktanz (20) umfaßt, dadurch gekennzeichnet, daß der Thermistor (17), um auch einen Schutz gegen Überlasten zu gewährleisten, thermisch mit dieser Induktanz (20) gekoppelt ist, so daß die Leitungssteuerung des Triac (10) im Fall einer Überlast bei jeder Halbperiode verzögert ist.

2. Leistungssteuervorrichtung nach Anspruch 1, dadurch gekennzeichnet, daß, wenn die Induktanz (20) ein Torus ist, der Thermistor (17) im Mittelpunkt dieses Torus angeordnet ist.

3. Leistungssteuervorrichtung nach Anspruch 2, dadurch gekennzeichnet, daß das Innenvolumen des die Induktanz (20) bildenden Torus eine thermische Kopplungsmasse (27) enthält, in die der Thermistor (17) eingebettet ist.

4. Leistungssteuervorrichtung nach Anspruch 3, dadurch gekennzeichnet, daß der die thermische Kopplungsmasse (27) bildende Werkstoff ein elektrisch isolierendes Produkt mit einer guten thermischen Leitfähigkeit ist.

5. Leistungssteuervorrichtung nach einem der Ansprüche 2 bis 4, dadurch gekennzeichnet, daß der Thermistor (17) von einem wärmeschrumpfenden Mantel (28) umgeben ist.
